# EUROPÄISCHE PATENTANMELDUNG

(11) **EP 1 437 787 A2**
(43) Veröffentlichungstag der Anmeldung: **14.07.2004**
(21) Anmeldenummer: 03028202.4
(22) Anmeldetag: 09.12.2003
(51) Int. Cl.: H01M 8/10, H01M 4/88

(54) **Verfahren zur Herstellung einer Membran-Elektrodeneinheit**

(30) Priorität: 10.12.2002 DE 10257643
(71) Anmelder: BASF AKTIENGESELLSCHAFT, 67056 Ludwigshafen (DE)
(72) Erfinder: Thate, Sven Dr., 67271 Neuleiningen (DE); Fischer, Andreas Dr., 68165 Mannheim (DE); Wessel, Helge Dr., 68167 Mannheim (DE)
(74) Vertreter: Isenbruck, Günter, Dr.

(57) **Zusammenfassung**

Die Erfindung betrifft ein Verfahren zur Herstellung einer Membran-Elektrodeneinheit (MEE), insbesondere für PEM-Brennstoffzellen, wobei die MEE eine Polymer-Elektrolyt-Membran (PEM) mit auf beiden Seiten aufgebrachten Reaktionsschichten und gegebenenfalls Gasverteilerschichten umfasst und mindestens eine der Reaktionsschichten mindestens eine katalytische Komponente und einen Elektronenleiter enthält, mit folgenden Verfahrensschritten:
A) Einbringen von Ionen der mindestens einen katalytischen Komponente in die Polymer-Elektrolyt-Membran und/oder in ein in die Reaktionsschichten eingebrachtes Ionomer,
B) Aufbringen des Elektronenleiters auf beide Seiten der Polymer-Elektrolyt-Membran,
C) elektrochemische Abscheidung der Ionen der katalytischen Komponente aus der Polymer-Elektrolyt-Membran und/oder aus dem in die Reaktionsschichten eingebrachten Ionomer auf dem Elektronenleiter auf mindestens einer Seite der Polymer-Elektrolyt-Membran.

## Beschreibung

Die Erfindung betrifft ein Verfahren zur Herstellung von Membran-Elektrodeneinheiten, insbesondere für PEM-Brennstoffzellen, die katalytisch wirksame Elektroden umfassen.

Brennstoffzellen sind Energiewandler, die chemische Energie in elektrische Energie umwandeln. In einer Brennstoffzelle wird das Prinzip der Elektrolyse umgekehrt. Man kennt heute verschiedene Arten von Brennstoffzellen, die sich im allgemeinen in der Betriebstemperatur voneinander unterscheiden. Der Aufbau der Zellen ist aber prinzipiell bei allen Typen gleich. Sie bestehen im allgemeinen aus zwei Elektroden, einer Anode und einer Katode, an denen die Reaktionen ablaufen, und einem Elektrolyten zwischen den beiden Elektroden. Bei einer Polymer-Elektrolyt-Membran-Brennstoffzelle (PEM-Brennstoffzelle) wird als Elektrolyt eine Polymermembran eingesetzt, die Ionen (insbesondere H⁺-Ionen) leitet. Der Elektrolyt hat drei Funktionen. Er stellt den ionischen Kontakt her, verhindert den elektrischen Kontakt und sorgt außerdem für das Getrennthalten der den Elektroden zugeführten Gase. Die Elektroden werden in der Regel mit Gasen versorgt, die im Rahmen einer Redoxreaktion umgesetzt werden. Die Elektroden haben die Aufgaben, die Gase (z.B. Wasserstoff oder Methanol und Sauerstoff) zuzuführen, Reaktionsprodukte wie Wasser oder CO₂ abzuführen, die Edukte katalytisch umzusetzen und Elektronen ab- bzw. zuzuführen. Die Umwandlung von chemischer in elektrischer Energie findet an der Drei-Phasen-Grenze von katalytisch aktiven Zentren (z.B. Platin), Ionenleitern (z.B. Ionenaustauscherpolymeren), Elektronenleitern (z.B. Graphit) und Gasen (z.B. H₂ und O₂) statt. Für die Katalysatoren ist eine möglichst große aktive Fläche entscheidend.

Im Stand der Technik wird bei der Herstellung von PEM-Brennstoffzellen meist ein auf Ruß geträgerter Katalysator mit einer Lösung oder Suspension eines Ionenleiters (Ionomer) vermischt und auf die ionenleitende Membran aufgebracht. Dies hat den Nachteil, dass nicht sichergestellt ist, dass der auf dem Elektronenleiter befindliche Katalysator auch vollständig von dem Ionenleiter erschlossen ist und damit aktiv sein kann.

Ferner ist häufig eine hohe (kostenintensive) Katalysatorbelegung notwendig, aufgrund einer nicht optimalen Katalysatorausnutzung. Dies beruht auf der Tatsache, dass ein großer Anteil des flächendeckend auf der Membran aufgebrachten Katalysators praktisch ungenutzt bleibt, da ein Teil des Katalysators nicht vom Ionomer erschlossen ist und die Ionenleitung in der Membran meist nicht ganzflächig, sondern z.B. über durch Phasenseparation entstehende Ionenkanäle oder über mit einem Ionenleiter gefüllte Poren eines nicht leitenden Polymers stattfindet. Katalysatoratome, die sich am Ende solcher Kanäle befinden, können besonders effektiv an der elektrochemischen Umsetzung teilnehmen. Zudem ergeben sich in gewebeverstärkten oder heterogenen Membranen Bereiche, die nicht am Ionentransport teilnehmen und damit einen Teil des in der Elektrode befindlichen Katalysators abschirmen. Der folglich ungenutzte Anteil des Katalysators trägt zu überhöhten Kosten einer solchen Brennstoffzelle bei.

Der Versuch die Katalysatoren gezielt nur in den elektrochemisch reaktiven Zonen zu lokalisieren, ist aus US 5,084,144 bekannt. Bei diesem Verfahren zur Steigerung der elektrokatalytischen Aktivität einer Gasdiffusionselektrode wird ein Katalysatormetall aus einer Elektrolytflüssigkeit elektrolytisch auf der Gasdiffusionselektrode abgeschieden. Das Katalysatormetall wird somit nicht gezielt nur am Ende der Ionenkanäle der Membran, sondern ganzflächig abgeschieden. Ein weiterer Nachteil dieses Verfahrens besteht darin, dass teure, edelmetallhaltige Elektrolytflüssigkeiten erforderlich sind, deren Aufarbeitung aufwendig und kostspielig ist. Ferner ist die Nutzung des im Elektrolyten gelösten Edelmetallkatalysators gering. Des weiteren enthält die Elektrolytflüssigkeit meist nicht nur die gewünschten Katalysatorionen, sondern auch andere Ionen, die auf der Gasdiffusionselektrode abgeschieden werden und Verunreinigungen der abgeschiedenen Katalysatorschicht darstellen.

Ein Verfahren zum elektrolytischen Abscheiden von Metallen auf einem Feststoffelektrolyten ist aus DE-OS 28 21 271 bekannt, wobei der Feststoffelektrolyt getrocknet, in einer das Metall als Salz enthaltenden Lösung behandelt, in eine Elektrolysezelle eingesetzt und einem Elektrolysevorgang unterworfen wird. Dabei wird die Zelle während einer vorgegebenen Zeitspanne unter einer konstanten Stromdichte gehalten. Dadurch wird eine geschlosssene Oberflächenbeschichtung des Feststoffelektrolyten erzielt, so dass sich Katalysatoratome nicht nur an den unter Brennstoffzellenbedingungen katalytisch aktiven Stellen, sondern auf der gesamten Feststoffelektrolyt-Oberfläche befinden.

Aufgabe der vorliegenden Erfindung ist es daher, ein Verfahren zur Verfügung zu stellen, durch das eine optimale Katalysatorbelegung an den Elektroden einer PEM-Brennstoffzelle erreicht wird.

Diese Aufgabe wird gelöst durch ein Verfahren zur Herstellung einer Membran-Elektroden-Einheit (MEE), insbesondere für PEM-Brennstoffzellen, wobei die MEE eine Polymer-Elektrolyt-Membran (PEM) mit auf beiden Seiten aufgebrachten Reaktionsschichten und gegebenenfalls Gasverteilerschichten umfasst und mindestens eine der Reaktionsschichten mindestens eine katalytische Komponente und einen Elektronenleiter enthält, mit folgenden Verfahrensschritten:
A) Einbringen von Ionen der mindestens einen katalytischen Komponente in die Polymer-Elektrolyt-Membran und/oder in ein in die Reaktiosschichten eingebrachtes Ionomer,
B) Aufbringen des Elektronenleiters auf beide Seiten der Polymer-Elektrolyt-Membran,
C) elektrochemische Abscheidung der Ionen der katalytischen Komponente aus der Polymer-Elektrolyt-Membran und/oder aus dem in die Reaktiosschichten eingebrachten Ionomer auf dem Elektronenleiter auf mindestens einer Seite der Polymer-Elektrolyt-Membran.

Unter einer Polymer-Elektrolyt-Membran ist im Zusammenhang mit dieser Erfindung sowohl eine als Elektrolyt dienende Polymermembran als auch eine Polymermembran, deren Poren mit einer als Elektrolyt dienenden Substanz (z.B. Ionomer, Säure) gefüllt ist, zu verstehen.

Die mindestens eine Membran-Elektroden-Einheit (MEE), zusammengesetzt aus den sandwichartig angeordneten Bestandteilen Elektrode/Membran/Elektrode, stellt das zentrale Element der PEM-Brennstoffzelle dar. Eine PEM-Brennstoffzelle enthält üblicherweise eine stapelweise Anordnung mehrerer Membran-Elektroden-Einheiten. Jede Elektrode umfasst üblicherweise eine Reaktionsschicht und bei mit Gasen betriebenen Brennstoffzellen eine Gasverteilerschicht.

Die Gasverteilerschicht kann als mechanischer Träger für die Elektrode dienen und sorgt für eine gute Verteilung des jeweiligen Gases über die Reaktionsschicht, sowie für das Ableiten der Elektronen. Eine Gasverteilerschicht wird insbesondere für Brennstoffzellen benötigt, die mit Wasserstoff einerseits und Sauerstoff bzw. Luft andererseits betrieben werden.

In der Reaktionsschicht findet die eigentliche elektrochemische Reaktion im Brennstoffzellenbetrieb statt. Mindestens eine der Reaktionsschichten enthält mindestens eine katalytische Komponente, die z.B. die Reaktion der Oxidation von Wasserstoff oder der Reduktion von Sauerstoff katalytisch unterstützt. Die Reaktionsschichten können aber auch mehrere katalytische Substanzen mit verschiedenen Funktionen enthalten. Zusätzlich kann die Reaktionsschicht ein funktionalisiertes Polymer (Ionomer) oder ein nicht funktionalisiertes Polymer enthalten.

Des weiteren dient ein Elektronenleiter in den Reaktionsschichten u.a. zum Leiten des bei der Brennstoffzellenreaktion fließenden elektrischen Stroms und als Trägermaterial für katalytische Substanzen.

Zur Durchführung des erfindungsgemäßen Verfahrens werden zunächst Ionen einer katalytischen Komponente in die Polymer-Elektrolyt-Membran eingebracht. In gleicher Weise können die Ionen zusätzlich in das gegebenenfalls in die Reaktionsschicht eingearbeitete Ionomer eingebracht werden.

Die Polymer-Elektrolyt-Membran besteht aus Kationen leitenden Polymermaterialien, die im folgenden als Ionomer bezeichnet werden. Üblicherweise wird ein Tetrafluorethylen-Fluorvinylether-Copolymer mit Säurefunktionen, insbesondere Sulfonsäuregruppen, verwendet. Ein solches Material wird beispielsweise unter dem Handelsnamen Nafion® von E.I. du Pont vertrieben. Beispiele für Ionomermaterialien, die in der vorliegenden Erfindung zur Verwendung kommen können, sind folgende Polymermaterialien oder Mischungen daraus:
- Nafion® (Dupont; USA)
- Per- und/oder teilfluorierte Polymere wie "Dow experimental membrane" (Dow Chemicals, USA),
- Aciplex-S® (Asahi Chemicals, Japan),
- Raipore R-1010 (Pall Rai Manufactoring Co., USA),
- Flemion (Asahi Glass, Japan),
- Raymion® (Chlorine Engineering Corp.; Japan).

Es sind jedoch auch andere, insbesondere fluorfreie Ionomermaterialien einsetzbar, z.B. sulfonierte Phenol-formaldehyd Harze (linear oder verknüpft); sulfoniertes Polystyrol (linear oder verknüpft); sulfonierte Poly-2,6-diphenyl-1,4-phenylenoxide, sulfonierte Polyarylethersulfone, sulfonierte Polyarylenethersulfone, sulfonierte Polyaryletherketone, phosphonierte Poly-2,6-dimethyl-1,4-phenylenoxide, sulfonierte Polyetherketone, sulfonierte Polyetheretherketone, Arylketone oder Polybenzimidazole.

Außerdem finden solche Polymermaterialien Anwendung, die folgende Bestandteile (oder Mischungen daraus) enthalten:
Polybenzimidazol-Phosphorsäure, sulfonierte Polyphenylene, sulfoniertes Polyphenylensulfid und polymere Sulfonsäuren des Typs Polymer-SO₃X (X= NH₄⁺, NH₃R⁺, NH₂R₂⁺, NHR₃⁺, NR₄⁺).

Zusätzlich zu den oben aufgeführten Polymermaterialien können die zur Verwendung kommenden Ionenaustauschermaterialien weitere anorganische und/oder organische Bestandteile (z.B. Silikate, Mineralien, Tone, Silikone) enthalten, die die Eigenschaften des Ionenaustauschermaterials (z.B. Leitfähigkeit) positiv beeinflussen.

Darüber hinaus ist der Einsatz poröser nichtleitender Polymere, die ihre Leitfähigkeit durch Füllen der Poren mit z.B. einem Ionomer (beispielsweise Goreselect, Gore, USA) oder einer Säure (beispielsweise H₃PO₄, H₂SO₄, Methansulfonsäure, ...) erhalten, möglich.

Das Einbringen der Ionen einer katalytischen Substanz in die Polymer-Elektrolyt-Membran erfolgt nach einem der im Stand der Technik bekannten Verfahren. Vorzugsweise liegt die katalytische Substanz ionisch in einer Lösung vor, mit der die Polymer-Elektrolyt-Membran getränkt wird. Durch Ionenaustausch lagern sich dabei die Ionen der katalytischen Substanz an die Membran, z.B. in Nafion® an ionische SO₃H-Gruppen an.

Bei säuregefüllten Membranen ist die Mischung der Säure mit der katalytischen Substanz zum Einbringen der Ionen der katalytischen Substanz in die Membran möglich.

In einer Ausführungsform der vorliegenden Erfindung wird die Diffusion der Ionen der katalytischen Substanz in die Polymer-Elektrolyt-Membran durch Anlegen eines äußeren elektrischen Feldes unterstützt.

Der nächste Schritt B) im erfindungsgemäßen Verfahren ist das Aufbringen des Elektronenleiters auf beide Seiten der Polymer-Elektrolyt-Membran. Dazu kann ein im Stand der Technik bekanntes Verfahren dienen, beispielsweise ein Trocken- oder Nasssprühverfahren, mit Hilfe dessen der in Pulverform vorliegende, gegebenenfalls in einer Ionomerlösung gelöste Elektronenleiter auf die Membran direkt oder auf einen Träger aufgesprüht wird, und ein anschließendes optionales Heißverpressen mit der Membran. Weitere Möglichkeiten der Auftragung sind z.B. der Siebdruck oder ein Sintern und anschließendes optionales Heißverpressen mit der Membran. Denkbar ist ferner ein Einbringen von Ionen der katalytischen Komponente in ein in die Elektronenleiter-Schicht eingearbeitetes Ionomer.

Vor dem darauf folgenden Schritt C) des erfindungsgemäßen Verfahrens erfolgt ein weitgehendes Fertigstellen und Einbauen der mindestens einen Membran-Elektroden-Einheit in eine Apparatur, die das Aufprägen eines elektrischen Stroms oder die Zuführung von Reaktanden (z.B. H₂/O₂) unter gleichzeitigem Ableiten eines elektrischen Stroms erlaubt. Denkbar wäre auch ein kontinuierliches Verfahren, bei dem Schritt C) des erfindungsgemäßen Verfahrens durchgeführt und anschließend die so bearbeitete mindestens eine Membran-Elektroden-Einheit in eine PEM-Brennstoffzelle eingebaut wird.

Bei der vor Schritt C) in eine PEM-Brennstoffzelle oder in eine andere, für die Durchführung der elektrochemischen Abscheidung geeignete Apparatur eingebauten Membran-Elektroden-Einheit liegt die in Schritt A) in die Membran eingebrachte katalytische Substanz in Form von in der Membran (beispielsweise an ihre negativ geladenen Sulfongruppen) gebundenen Ionen vor. Diese werden in Schritt C) des erfindungsgemäßen Verfahrens elektrochemisch aus der Polymer-Elektrolyt-Membran auf den Elektronenleiter auf mindestens einer Seite der Polymer-Elektrolyt-Membran abgeschieden. Unter elektrochemischer Abscheidung sind in diesem Zusammenhang die Abscheidung der katalytischen Komponenten unter Umwandlung von chemischer in elektrische Energie oder umgekehrt zu verstehen. Der Mechanismus ist dabei eine Ionenwanderung in der Membran und eine ablaufende Elektrodenreaktion.

Ein Vorteil des erfindungsgemäßen Verfahrens ist, dass sich durch die elektrochemische Abscheidung der katalytischen Komponente aus der Membran diese katalytische Komponente nur dort abscheiden kann, wo sich auch die elektrochemisch aktive Dreiphasengrenze befindet. Die katalytische Komponente wird somit gezielt dort auf den Elektronenleiter abgeschieden, wo die Ionenkanäle der Membran enden. Es wird folglich keine geschlossene Schicht der katalytischen Komponente gebildet, sondern der Katalysator wird nur an Stellen abgeschieden, an denen er optimal genutzt wird. Es ergibt sich eine effektive Reduzierung der Katalysatorbelegung ohne Herabsetzung der Brennstoffzellenleistung. Beispielsweise können Brennstoffzellen mit einer Pt-Belegung des Elektronenleiters von weniger als 1 mg/cm² betrieben werden. Die Reduzierung der Katalysatorbelegung bedeutet in vorteilhafter Weise eine Kostenreduzierung für die MEE-Herstellung, da als katalytische Komponenten häufig Metalle eingesetzt werden. Da die katalytische Komponente bei der vorliegenden Erfindung fein verteilt in Ionenform im Inneren der Polymer-Elektrolyt-Membran vorliegt, werden außerdem im Unterschied zu der Abscheidung von Katalysatorionen aus einer Lösung beim erfindungsgemäßen Verfahren keine Verunreinigungen in Form von anderen unerwünschten Ionen auf dem Elektronenleiter abgeschieden, sondern nur die in der Membran enthaltenen Katalysatorionen. Ein weiterer Vorteil des erfindungsgemäßen Verfahrens ist die geringe Zahl der Verfahrensschritte zur Herstellung einer Polymer-Elektrolyt-Membran-Brennstoffzelle. Dies wirkt sich ebenfalls positiv auf die Kosten aus. Diese möglichen Kostenreduzierungen machen den Einsatz von PEM-Brennstoffzellen attraktiver für einen breiten kommerziellen Einsatz, beispielsweise in Brennstoffzellen-Fahrzeugen oder in stationären Brennstoffzellensystemen zur Hausenergieversorgung.

In einer bevorzugten Ausführungsform der vorliegenden Erfindung erfolgt das elektrochemische Abscheiden der Ionen der katalytischen Komponente in Schritt C) des erfindungsgemäßen Verfahrens durch das Betreiben einer Apparatur, die das Ableiten eines elektrischen Stroms und die Zuführung von Brennstoffzellen-Reaktanden erlaubt, unter Brennstoffzellenbedingungen, z.B. durch das Betreiben einer PEM-Brennstoffzelle unter Brennstoffzellenbedingungen. Durch Variation der Betriebsbedingungen während der Abscheidung (Lastwechsel, Strom, Spannung, Gaszusammensetzung, Temperatur, Druck etc.) ist es möglich, das Abscheideergebnis (Feinverteilung, Partikelgröße) gezielt zu steuern.

Wird das elektrochemische Abscheiden z.B. unter H₂/O₂,Luft-Brennstoffzellenbedingungen durchgeführt, so werden Gasverteilerschichten benötigt, die vor der Durchführung von Schritt C) des erfindungsgemäßen Verfahrens auf den Reaktionsschichten bzw. auf dem jeweiligen Elektronenleiter aufgebracht werden müssen. Die Gasverteilerschichten (beispielsweise Kohlenstofffließ (E-Tek Carbon Cloth) oder Kohlenstoffpapier (z.B. Toray Carbon Paper (Electrochem. Inc.), Spectracorp Carbon Paper (Spectracorp), Sicracet Gas Diffusion Media (SGL Carbon))) werden vorzugsweise vor dem elektrochemischen Abscheiden (Schritt C)) durch Auflegen, Walzen, Heißpressen oder sonstige dem Fachmann geläufige Verfahren aufgebracht. Dann wird der Anode der Apparatur z.B. Wasserstoff und der Kathode z.B. Sauerstoff zugeführt. An der Anode, die vorzugsweise bereits einen die Aktivierungsenergie für diese Reaktion herabsetzenden Katalysator enthält, entstehen H⁺-Ionen und Elektronen durch Oxidation des Wasserstoffs. Die H⁺-Ionen wandern gemeinsam mit den in die Membran in Schritt A) eingebrachten Ionen der katalytischen Komponente durch die Membran zur Kathode, die vorzugsweise schon eine geringe Menge der katalytischen Komponente enthält und an der die Reduktion von Sauerstoff zu Wasser und die Abscheidung der Katalysatorkationen stattfindet. Die für die Reduktion nötigen Elektronen fließen durch einen äußeren Stromkreis von der Anode zur Kathode. So werden in vorteilhafter Weise ohne zusätzlichen Arbeitsschritt die Katalysator-Kationen genau dort auf dem Elektronenleiter fest haftend abgeschieden, wo sie optimal für die Brennstoffzelle genutzt werden.

Alternativ dazu ist ein elektrochemisches Abscheiden der mindestens einen katalytischen Komponente auf den Elektronenleiter in flüssiger Umgebung möglich, beispielsweise bei einer Direktoxidations-Brennstoffzelle wie einer Direktmethanol-Brennstoffzelle.

Bei einer weiteren bevorzugten Ausführungsform der vorliegenden Erfindung erfolgt das elektrochemische Abscheiden der Ionen der katalytischen Komponente in Schritt C) des erfindungsgemäßen Verfahrens durch das Betreiben einer Apparatur, die das Aufprägen eines elektrischen Stroms zur elektrolytischen Abscheidung der katalytischen Komponente erlaubt. Dies erfolgt beispielsweise durch Betreiben der Apparatur (z.B. einer PEM-Brennstoffzelle) unter Elektrolysebedingungen. Nachdem die Membran-Elektroden-Einheit vor Schritt C) des erfindungsgemäßen Verfahrens weitgehend fertiggestellt und in die Apparatur (z.B. eine PEM-Brennstoffzelle) eingebaut wurde, werden dann die in der Membran befindlichen Ionen durch Elektrolyse auf dem Elektronenleiter abgeschieden. Diese so abgeschiedenen Katalysatorionen befinden sich zielgenau am Ende von ionenleitenden Bereichen der Membran und sind damit vollständig aktiv. Die Elektrolyse kann durch Anlegen einer Gleichspannung an die Elektroden der Apparatur (z.B. Brennstoffzelle) durchgeführt werden. Dadurch werden die Metallionen, die gleichmäßig verteilt in der Polymer-Elektrolyt-Membran vorliegen, kathodisch auf dem Elektronenleiter abgeschieden. Je nachdem, auf welchem Elektronenleiter (anoden- oder kathodenseitig von der Brennstoffzelle) die katalytische Komponente abgeschieden werden soll, wird bei der Elektrolyse die Polung der Elektroden gewählt.

Bei einer bevorzugten Ausführungsform der vorliegenden Erfindung wird die Elektrolyse zum Abscheiden der katalytischen Komponente durch Anlegen einer zeitlich veränderlichen, z.B. gepulsten Gleichspannung oder eines zeitlich veränderlichen Gleichstrom an die Elektroden der Brennstoffzelle durchgeführt. Daraus ergibt sich der Vorteil, dass eine Steuerung der Partikelgröße der abgeschiedenen Partikel und der Oberflächenmorphologie des Katalysators (z.B. des Edelmetalls) ermöglicht wird.

Bei einer weiteren bevorzugten Ausführungsform der vorliegenden Erfindung wird die Elektrolyse zum Abscheiden der katalytischen Komponente aus der Membran auf den jeweiligen Elektronenleiter durch Anlegen einer Wechselspannung (auch einer Gleichspannung mit periodischer Polumkehr) oder einer mit einer Wechselspannung überlagerten Gleichspannung an die Elektrode in der Brennstoffzelle durchgeführt. Dabei kann die katalytische Komponente immer abwechselnd auf den beiden Elektroden abgeschieden werden. Vorteilhaft ist dabei, dass die Katalysatorionen sehr fein verteilt und gleichmäßig auf beiden Elektroden abgeschieden werden.

Bei einer bevorzugten Ausführungsform der vorliegenden Erfindung wird in Schritt C) als katalytische Komponente mindestens ein Element aus der 3. bis 14. Gruppe des Periodensystems der Elemente (PSE), besonders bevorzugt aus der 8. bis 14. Gruppe des PSE, auf dem Elektronenleiter auf mindestens einer Seite der Polymer-Elektrolyt-Membran abgeschieden. Diese Elektrokatalysatoren unterstützen die Brennstoffzellenreaktion (Oxidation von Wasserstoff bzw. Reduktion von Sauerstoff) katalytisch. Durch das erfindungsgemäße Verfahren werden diese katalytisch aktiven Komponenten in hochdisperser Form auf die Oberfläche des als Träger dienenden Elektronenleiters aufgebracht. Die genannten katalytisch aktiven Komponenten werden in Schritt A) des erfindungsgemäßen Verfahrens vorzugsweise in einer Konzentration von 0,000005 bis 0,05 mmol/cm² in die Polymer-Elektrolyt-Membran eingebracht.

Bei einer bevorzugten Ausführungsform der vorliegenden Erfindung wird in Schritt C) als katalytische Komponente mindestens eines der Elemente Pt, Co, Fe, Cr, Mn, Cu, V, Ru, Pd, Ni, Mo, Sn, Zn, Au, Ag, Rh, Ir oder W auf dem in der Brennstoffzelle kathodenseitigen Elektronenleiter abgeschieden. Dabei kann sich auf dem Elektronenleiter bereits mindestens eine weitere katalytische Substanz befinden, die zur Herabsetzung der Aktivierungsenergie für die Brennstoffzellenreaktion benötigt wird. Beispielsweise kann in Schritt C) des erfindungsgemäßen Verfahrens Kupfer als zweite katalytisch aktive Substanz auf einem Elektronenleiter abgeschieden werden, der bereits Platin als erste katalytisch aktive Substanz trägert. Die genannten katalytisch aktiven, auf der Kathodenseite der Brennstoffzelle abzuscheidenden Komponenten Pt, Co, Fe, Cr, Mn, Cu, V, Ru, Pd, Ni, Mo, Sn, Zn, Au, Ag, Rh, Ir oder W werden in Schritt A) des erfindungsgemäßen Verfahrens vorzugsweise in einer Menge/Konzentration von 0,000005 bis 0,05 mmol/cm² in die Polymer-Elektrolyt-Membran eingebracht.

Als problematisch unter Brennstoffzellen-Betriebsbedingungen hat sich die kathodische Reduktion des Sauerstoffs erwiesen:

An kathodischem Elektrodenmaterial der Brennstoffzelle, wie es im Stand der Technik beschrieben wird, werden hochreaktive peroxidische Sauerstoffspezies (z.B. HO•, HOO•.) gebildet, die die protonendurchlässige Membran und das Ionomer der Elektrode irreversibel schädigen. Es wurde gefunden, dass durch gezielt am bzw. im Elektrodenmaterial eingebrachte Additive, die deperoxidationsaktive Eigenschaften aufweisen, die Lebens- bzw. Betriebsdauer und Wirtschaftlichkeit von Brennstoffzellen nachhaltig erhöht werden. Unter deperoxidationsaktiv ist dabei die Eigenschaft zu verstehen, dass die Bildung von Peroxiden verhindert wird und bereits gebildete Peroxide nachträglich zersetzt werden. Peroxide sind in diesem Zusammenhang alle Verbindungen vom Typ R-O-O-R und die dazugehörigen Radikale (RO• oder ROO•), wobei R bevorzugt für H steht. Beispielsweise ist HOO• ein peroxidisches Radikal zu H₂O₂ (Wasserstoffperoxid). Durch Anbringung geeigneter deperoxidationsaktiver Verbindungen und/oder Elemente in oder an den Brennstoffzellenelektroden erfolgt unter Brennstoffzellenbedingungen ein rascher Abbau bzw. eine Unterdrückung der Bildung der Peroxide. Eine irreversible Schädigung der Ionenaustauschermembran durch reaktive Peroxide wird nicht mehr beobachtet. Dies ist überraschend, da gemäß dem Prinzip der Mikroreversibilität Stoffe, die Peroxide zersetzen, auch Peroxide bilden können. Beispielsweise fungiert Platin unter Brennstoffzellenbedingungen als Peroxidbildner aufgrund der permanenten Zufuhr O₂. Unter anderen Bedingungen wird es zur Peroxidzersetzung eingesetzt. Erst durch Einbringen weiterer deperoxidationsaktiver Additive gelingt es, die in der Brennstoffzelle am Platin gebildeten Peroxide zu zersetzen bzw. ihre Bildung zu unterdrücken. Als Aktivkomponenten für solche als deperoxidationsaktive Additive fungierende Elemente oder Verbindungen sind hauptsächlich die Metalle Co, Fe, Cr, Mn, Cu, V, Ru, Pd, Ni, Mo, Sn, Zn, Au, Ag, Rh, Ir oder W zu nennen. Die genannten Metalle werden daher als katalytische Komponenten vorzugsweise mittels des erfindungsgemäßen Verfahrens auf dem kathodenseitigen Elektronenleiter abgeschieden. Sie werden in Schritt A) des erfindungsgemäßen Verfahrens vorzugsweise in einer Menge/Konzentration von 0,000005 bis 0,05 mmol/cm² in die Polymer-Elektrolyt-Membran eingebracht.

Des weiteren ist die Reduzierung von kathodenseitigen Überspannungen ein wichtiges Ziel der Brennstoffzellenherstellung. Durch Katalysatoren, die mehrere Aktivkomponenten enthalten, werden hier Fortschritte erzielt. Bei einer bevorzugten Ausführungsform der vorliegenden Erfindung werden daher mehrere katalytische Komponenten auf dem in der Brennstoffzelle kathodenseitigen Elektronenleiter abgeschieden. Dabei können einerseits in Schritt A) des erfindungsgemäßen Verfahrens mehrere katalytische Komponenten in die Polymer-Elektrolyt-Membran (PEM) eingebracht werden, die dann in Schritt C) gemeinsam auf dem Elektronenleiter abgeschieden werden und/oder andererseits bereits katalytische Komponenten gemeinsam mit dem Elektronenleiter in Schritt B) auf die PEM aufgebracht und anschließend zusätzliche katalytische Komponenten in Schritt C) darauf abgeschieden werden.

Bei einer bevorzugten Ausführungsform der vorliegenden Erfindung wird in Schritt C) als katalytische Komponente mindestens eines der Elemente Co, Fe, Cr, Mn, Cu, V, Ru, Pd, Ni, Mo, Sn, Zn, Au, Ag, Rh, Ir oder W auf den in der Brennstoffzelle anodenseitigen E-lektrodenleiter abgeschieden.

Bei der "kalten Verbrennung" von Methanol in der Brennstoffzelle entsteht als ein Nebenprodukt in geringen Mengen Kohlenmonoxid (CO). Dadurch steigt die CO-Konzentration auf der Anodenseite der Brennstoffzelle an, so dass eine katalytische Komponente (z.B. Platin), die zur katalytischen Unterstützung der Anodenreaktion dient, mit CO bedeckt wird. Auch bei H₂-O₂-Brennstoffzellen, bei denen der Wasserstoff durch Reformierung von Kohlenwasserstoffen bereitgestellt wird, kommt es zum Eintrag von CO in die Brennstoffzelle. In beiden Fällen sinkt folglich die freie Oberfläche der katalytischen Komponente für die H₂-Adsorption und -Oxidation. Es kommt zur "CO-Vergiftung" der Brennstoffzelle. Durch Oxidation des CO an dem CO-bedeckten Katalysator durch H₂O kann eine "Desorption" der CO-Moleküle erfolgen. Unedle Cokatalysatoren, z.B. Ruthenium, ermöglichen die Adsorption von H₂O bei niedrigeren Anodenpotentialen und tragen somit zur Erhöhung der CO-Toleranz auf der Anodenseite der Brennstoffzelle bei. Erfindungsgemäß können solche katalytischen Komponenten zielgenau auf dem Elektronenleiter anodenseitig abgeschieden werden, beispielsweise Ruthenium auf einem Pt-C-Elektronenleiter und so das Risiko einer CO-Vergiftung der Brennstoffzelle vermindert werden. Die genannten auf der Anodenseite der Brennstoffzelle abzuscheidenden Komponenten Co, Fe, Cr, Mn, Cu, V, Ru, Pd, Ni, Mo, Sn, Zn, Au, Ag, Rh, Pt, Ir oder W werden in Schritt A) des erfindungsgemäßen Verfahrens vorzugsweise in einer Menge/Konzentration von 0,000005 bis 0,05 mmol/cm² in die Polymer-Elektrolyt-Membran eingebracht.

Bei dem erfindungsgemäßen Verfahren enthält der eingesetzte Elektronenleiter vorzugsweise mindestens ein metallisches Element in Form von Fließ, Fasern oder Pulver. Denkbar ist weiterhin der Einsatz von elektronenleitenden Polymeren als Elektronenleiter. Besonders bevorzugt werden feinteilige C-Ruße oder Graphitpulver als Elektronenleiter eingesetzt. Der Ruß oder das Graphit dienen in der Brennstoffzelle mit der großen Oberfläche ihrer Teilchen als elektrisch leitende, gasporöse Träger für mindestens eine katalytische Komponente. Diese katalytische Komponente kann mit dem erfindungsgemäßen Verfahren auf dem Elektronenleiter aufgebracht werden, der bereits mit einer Polymer-Elektrolyt-Membran verbunden ist.

In einer bevorzugten Ausführungsform der vorliegenden Erfindung umfasst der in Schritt B) des erfindungsgemäßen Verfahrens aufgebrachte Elektronenleiter mindestens eine katalytische Komponente aus der Gruppe Pt, Co, Fe, Cr, Mn, Cu, V, Ru, Pd, Ni, Mo, Sn, Zn, Au, Ag, Rh, Ir oder W. Dabei dient der Elektronenleiter bereits als Träger für mindestens eine katalytische Komponente (z.B. Platin) wenn er in Schritt B) mit der Membran verbunden wird und mindestens eine weitere katalytische Komponente (z.B. Ru oder Cu) oder die bereits vorhandene katalytische Komponente (z.B. zusätzliches Pt) wird in Schritt C) des erfindungsgemäßen Verfahrens auf diesem katalysatorhaltigen Elektronenleiter abgeschieden. So kann anodenseitig z.B. eine die CO-Toleranz erhöhende katalytische Komponente in dem erfindungsgemäßen Verfahren auf einen Elektronenleiter abgeschieden werden, auf dem sich bereits eine die Brennstoffzellenreaktion katalytisch unterstützende katalytisch aktive Komponente befindet. Kathodenseitig kann beispielsweise eine deperoxidationsaktive Komponente auf einer Elektronenleiter-Katalysator-Kombination abgeschieden werden.

Bei einer bevorzugten Ausführungsform der vorliegenden Erfindung wird in Schritt B) zusammen mit dem Elektronenleiter ein Ionenleiter (z.B. eine Ionomerlösung oder Suspension) auf mindestens eine Seite der Polymer-Elektrolyt-Membran aufgebracht. Durch das gemeinsame Aufbringen von Ionomer und Elektronenleiter ergibt sich der Vorteil einer guten Erschließung des Elektronenleiters mit Ionomer und somit eine große 3-Phasen-Grenzfläche.

## Patentansprüche

1. Verfahren zur Herstellung einer Membran-Elektrodeneinheit (MEE), insbesondere für PEM-Brennstoffzellen, wobei die MEE eine Polymer-Elektrolyt-Membran (PEM) mit auf beiden Seiten aufgebrachten Reaktionsschichten und gegebenenfalls Gasverteilerschichten umfasst und mindestens eine der Reaktionsschichten mindestens eine katalytische Komponente und einen Elektronenleiter enthält, mit folgenden Verfahrensschritten:
A) Einbringen von Ionen der mindestens einen katalytischen Komponente in die Polymer-Elektrolyt-Membran und/oder in ein in die Reaktionsschichten eingebrachtes Ionomer,
B) Aufbringen des Elektronenleiters auf beide Seiten der Polymer-Elektrolyt-Membran,
C) elektrochemische Abscheidung der Ionen der katalytischen Komponente aus der Polymer-Elektrolyt-Membran und/oder aus dem in die Reaktionsschichten eingebrachten Ionomer auf dem Elektronenleiter auf mindestens einer Seite der Polymer-Elektrolyt-Membran.

2. Verfahren gemäß Anspruch 1, **dadurch gekennzeichnet, dass** die elektrochemische Abscheidung der Ionen der katalytischen Komponente in Schritt C) unter Brennstoffzellenbedingungen erfolgt.

3. Verfahren gemäß Anspruch 2, **dadurch gekennzeichnet, dass** bei der Abscheidung unter Brennstoffzellenbedingungen eine Variation von Betriebsbedingungen vorgenommen wird.

4. Verfahren gemäß Anspruch 1, **dadurch gekennzeichnet, dass** die elektrochemische Abscheidung der Ionen der katalytischen Komponente in Schritt C) unter Elektrolysebedingungen erfolgt.

5. Verfahren gemäß Anspruch 4, **dadurch gekennzeichnet, dass** die Elektrolysebedingungen das Anliegen einer konstanten oder zeitlich veränderlichen Gleichspannung oder einer Wechselspannung umfassen.

6. Verfahren gemäß einem der Ansprüche 1 bis 5, **dadurch gekennzeichnet, dass** in Schritt C) als katalytische Komponente mindestens ein Element aus der 3. bis 14. Gruppe des Periodensystems der Elemente auf den Elektronenleiter auf mindestens einer Seite der Polymer-Elektrolyt-Membran abgeschieden wird.

7. Verfahren gemäß einem der Ansprüche 1 bis 6, **dadurch gekennzeichnet, dass** in Schritt C) als katalytische Komponente mindestens eines der Elemente Pt, Co, Fe, Cr, Mn, Cu, V, Ru, Pd, Ni, Mo, Sn, Zn, Au, Ag, Rh, Ir oder W auf dem kathodenseitigen Elektronenleiter abgeschieden wird.

8. Verfahren gemäß einem der Ansprüche 1 bis 7, **dadurch gekennzeichnet, dass** in Schritt C) als katalytische Komponente mindestens eines der Elemente Pt, Co, Fe, Cr, Mn, Cu, V, Ru, Pd, Ni, Mo, Sn, Zn, Au, Ag, Rh, Ir oder W auf dem anodenseitigen Elektronenleiter abgeschieden wird.

9. Verfahren gemäß einem der Ansprüche 1 bis 8, **dadurch gekennzeichnet, dass** der Elektronenleiter Kohlenstoff in Form von Fließ, Fasern oder Pulver enthält.

10. Verfahren gemäß einem der Ansprüche 1 bis 9, **dadurch gekennzeichnet, dass** der in Schritt B) aufgebrachte Elektronenleiter mindestens eine katalytische Komponente aus der Gruppe Pt, Co, Fe, Cr, Mn, Cu, V, Ru, Pd, Ni, Mo, Sn, Zn, Au, Ag, Rh, Ir oder W umfasst.

11. Verfahren gemäß einem der Ansprüche 1 bis 10, **dadurch gekennzeichnet, dass** in Schritt B) zusammen mit dem Elektronenleiter ein Ionenleiter auf mindestens eine Seite der Polymer-Elektrolyt-Membran aufgebracht wird.

12. Verfahren gemäß einem der Ansprüche 1 bis 11, **dadurch gekennzeichnet, dass** die katalytische Komponente in Schritt A) in einer Menge von 0,000005 bis 0,05mmol/cm² in die Polymer-Elektrolyt-Membran eingebracht wird.
